# EUROPEAN PATENT APPLICATION

(11) **EP 4 318 111 A1**
(43) Date of publication of application: **07.02.2024**
(21) Application number: 23188543.5
(22) Date of filing: 28.07.2023
(51) Int. Cl.: G02F 1/1333

(54) **DISPLAY DEVICE HAVING COMPOUND OPTICAL ADHESIVE LAYER**

(30) Priority: 05.08.2022 TW 111129629
(71) Applicant: Lucent Advanced Material Corp., New Taipei City 222 (TW)
(72) Inventor: CHOU, Jui Shu, 222 New Taipei City (TW)
(74) Representative: Patentship Patentanwaltsgesellschaft mbH

(57) **Abstract**

The present invention relates to a display device (100), which is assembled by an adhesive bonding process. The display device (100) includes: a display module (110) comprising an edge area (EA1), a front surface (115) facing toward an upper module (120), a display surface (DF) incorporated into the front surface (115) and displaying a digital content; the upper module (120) comprising the edge area (EA2) and configured above the display module (110); an edge adhesive layer (130) having a Shore hardness and configured in a part of the edge area (EA) and between the display module (110) and the upper module (120); and a conformal adhesive layer (140) configured between the display module (110) and the upper module (120), having a Shore hardness less than the Shore hardness of the edge adhesive layer (130) and covering a part of the display surface (DF).

## Description

### FIELD

The present invention relates to a display device with a composite optical adhesive layer, in particular, a display device in which an optical adhesive with different characteristics is used for lamination near the outer edge area and the central display area respectively.

### BACKGROUND

For the known touchscreen assembly, the laminating process is generally used to adhere the touch panel to the LCD module, using a solid or liquid optical adhesive to fill the tiny gap between the LCD module and the touch panel, the optical adhesive will cover both the central part of the display area and the border area at the edge. To ensure the optical characteristics and display quality of the finished touch panel.

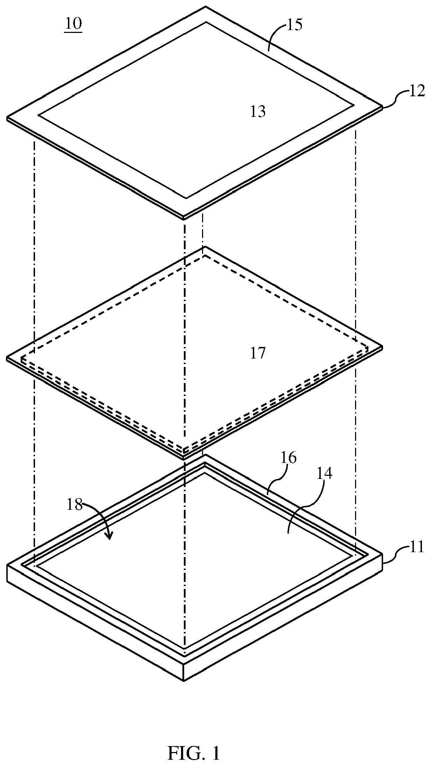

FIG. 1 is a schematic diagram illustrating the structural decomposition and lamination assembly for the known touch panel and LCD module. In the known touchscreen 10, the touch panel 12 is laminated to the display direction of the LCD module 11, the touch operation area 13 of the touch panel 12 is positioned to correspond to the display area 14 of the LCD module 11, and the opaque masking layer 15 on the protective glass 20 is positioned to correspond to the bezel 16. The opaque masking layer 15 on the protective glass 20 is positioned to the bezel 16 to visually obscure the structure of the bezel 16 and the surrounding electronic components, and the touch screen 10 defines the touch operation area 13 through the opaque masking layer 15.

In the known lamination process, a layer of optical adhesive 17 is filled into the gap 18 between the touch panel 12 and the LCD module 11. The early lamination process only filled the gap 18 covering the display area 14 and avoided placing solid optical adhesive 17 over the bezel 16. The improved lamination process now extends the solid optical adhesive 17 across a portion of the bezel 16 to eliminate most of the air within the display area 14.

However, the known laminating process, whether using solid optical adhesive or liquid optical adhesive, each has many drawbacks. For example, even with the addition of the debubbling step, due to the lack of fluidity of the solid optical adhesive itself, the inclusion of trace gases within the adhesive, and the process temperature and pressure conditions, it is usually difficult to fill the various irregular geometric assembly seams, corners, angles, or edges included in the gap based on the solid optical adhesive laminating process, resulting in the residual air bubbles that lead to poor optical quality of the finished product, and the process yield is not easily improved, and so on.

The disadvantage of the liquid optical adhesive-based laminating process is that it requires a hollow cavity for filling and laminating the liquid adhesive, which has a high equipment cost, and it requires the formation of a temporary dam structure before filling the liquid adhesive. After filling the liquid optical adhesive, it needs time to wait for the liquid optical adhesive to flow, fill naturally and then cure, which is very long. In addition, the quality of the finished product is affected by the adhesive, the dam, the filling process and the curing process, so it is difficult to control.

Hence, there is a need to solve the above deficiencies/issues.

### SUMMARY

The present invention relates to a display device with a composite optical adhesive layer, in particular, a display device in which an optical adhesive with different characteristics is used for lamination near the outer edge area and the central display area respectively.

Accordingly, the present invention provides a display device, which is assembled by an adhesive bonding process. The device comprises: a display module comprising an edge area, a front surface facing toward an upper module, a display surface incorporated into the front surface and displaying a digital content; the upper module comprising the edge area and configured above the display module; an edge adhesive layer having a Shore hardness and configured in a part of the edge area and between the display module and the upper module; and a conformal adhesive layer configured between the display module and the upper module, having a third Shore hardness less than the Shore hardness and covering a part of the display surface. The present invention further provides a display device, which is assembled by an adhesive bonding process. The device comprises: a display module comprising a first edge area; an upper module comprising a second edge area and configured above the display module; an edge adhesive layer having a compressibility and configured in a part of the first edge area and a part of the second edge area and between the display module and the upper module; and a conformal adhesive layer configured between the display module and the upper module and having a third compressibility great than the compressibility.

More specifically, a first aspect of the invention relates to a display device, which is assembled by an adhesive bonding process, comprising: a display module comprising an edge area, a front surface facing toward an upper module, a display surface incorporated into the front surface and displaying a digital content; the upper module comprising the edge area and configured above the display module; an edge adhesive layer having a Shore hardness and configured in a part of the edge area and between the display module and the upper module; and a conformal adhesive layer configured between the display module and the upper module, having a third Shore hardness less than the Shore hardness and covering a part of the display surface.

In a first embodiment of the first aspect, the display device further comprises one of: a frame configured in the edge area, protruded from the front surface and having a perpendicular surface and a frame height, and having a step raised from the front surface; a corner formed by the perpendicular surface and the front surface and situated at where the perpendicular surface and the front surface meet with each other, wherein the perpendicular surface and the front surface share with a common edge; and a light shielding layer attached to a side of the edge adhesive layer, wherein the edge area comprises the frame and the corner. In a second embodiment of the first aspect in combination with the first embodiment of the first aspect, the edge area covers a scope extended from a most outer edge of the display module toward a center to a display edge of the display area, and the edge area covers a part of a non-display area outside the display area. In a third embodiment of the first aspect in combination with the first embodiment of the first aspect, the light shielding layer comprises a material selected from one of a black gel, an opaque resin, an opaque acrylic, an opaque plastic sheet, and an opaque metal sheet. In a fourth embodiment of the first aspect, the edge adhesive layer further comprises one of: a first edge adhesive layer having a first Shore hardness and configured in a part of the edge area and between the display module and the upper module; a second edge adhesive layer having a second Shore hardness and configured in a part of the edge area, between the display module and the upper module and in close proximity to the first edge adhesive layer; and a light shielding layer attached to a side of the second edge adhesive layer, wherein the first Shore hardness and the second Shore hardness are greater than the Shore hardness. In a fifth embodiment of the first aspect in combination with the fourth embodiment of the first aspect, the display device further comprises one of: the edge adhesive layer being compressible and having a compressibility; the first edge adhesive layer being compressible and having a first compressibility; the second edge adhesive layer being compressible and having a second compressibility; the conformal adhesive layer being compressible and having a third compressibility; and the third compressibility is greater than the compressibility, the first compressibility and the second compressibility. In a sixth embodiment of the first aspect in combination with the fourth embodiment of the first aspect, the edge adhesive layer, the first edge adhesive layer and the second edge adhesive layer comprise one of a AB glue, a hard silicone, a catalyst, a hardener, an acrylic based glue, a PU based glue, an Epoxy based glue, a resin based glue, an organosilicon polymer, a room temperature curing glue, a UV curing glue, a heat-curing glue, a composite glue and a combination thereof. In a seventh embodiment of the first aspect in combination with the fourth embodiment of the first aspect, the edge adhesive layer, the first edge adhesive layer and the second edge adhesive layer has a viscosity in a range between 50,000cp and 200,000cp before curing and a hardness in range between Shore 00 50 and Shore A 60. In an eighth embodiment of the first aspect, the conformal adhesive layer further comprises one of a silica gel, a vinyl group, an equivalent reactive functional group with excessive vinyl and a combination thereof. In a ninth embodiment of the first aspect, the conformal adhesive layer is pre-cured before the implementation of adhesive bonding process and has a hardness in a range between Shore 00 0 and Shore 00 80 after pre-cured and a light permeability greater than 91%. In a tenth embodiment of the first aspect, the conformal adhesive layer has a bulk resistance of at least 8×10¹⁵(Ω· cm), a surface resistivity of at least 3×10¹⁵(Ω · cm), a dielectric constant in a range between 2.79-2.81 and an adhesive strength in a range between 3.0N and 10N (N/20mm). In an eleventh embodiment of the first aspect, the upper module is a touch panel, a protective glass or a protective layer, the display module is a plasma display panel, a liquid crystal display, a TFT liquid crystal display, a LED display, a micro LED display, an OLED display or an electronic ink thin film display. In a twelfth embodiment of the first aspect, the display module comprises a flatten structure and a curved structure. In a thirteenth embodiment of the first aspect, the upper module comprises a flatten structure and a curved structure.

Furthermore, a second aspect of the invention relates to a display device, which is assembled by an adhesive bonding process, comprising: a display module comprising a first edge area; an upper module comprising a second edge area and configured above the display module; an edge adhesive layer having a compressibility and configured in a part of the first edge area and a part of the second edge area and between the display module and the upper module; and a conformal adhesive layer configured between the display module and the upper module and having a third compressibility great than the compressibility.

The above content described in the summary is intended to provide a simplified summary for the presently disclosed invention, so that readers are able to have an initial and basic understanding to the presently disclosed invention. The above content is not aimed to reveal or disclose a comprehensive and detailed description for the present invention, and is never intended to indicate essential elements in various embodiments in the present invention, or define the scope or coverage in the present invention.

### DESCRIPTION OF THE DRAWINGS

A more complete appreciation according to the present invention and many of the attendant advantages thereof are readily obtained as the same become better understood by reference to the following detailed description when considered in connection with the accompanying drawing, wherein:
FIG. 1 is a schematic diagram illustrating the structural decomposition and lamination assembly for the known touch panel and LCD module;
FIGS. 2 and 3 are schematic diagrams illustrating a side view for the first embodiment for the display device according to the present invention;
FIG. 4 is schematic diagram illustrating a top view for the first embodiment for the display device according to the present invention;
FIGS. 5 and 6 are schematic diagrams illustrating the side view for the second embodiment for the display device according to the present invention;
FIG. 7 is a schematic diagram illustrating the top view for the second embodiment for the display device according to the present invention;
FIGS. 8 and 9 are schematic diagrams illustrating the side view for the third embodiment for the display device according to the present invention;
FIG. 10 is a schematic diagram illustrating the top view for the third embodiment for the display device according to the present invention;
FIGS. 11 and 12 are schematic diagrams illustrating the side view for the fourth embodiment for the display device according to the present invention;
FIG. 13 is a schematic diagram illustrating the top view for the fourth embodiment for the display device according to the present invention;
FIGS. 14 and 15 are schematic diagrams illustrating the side view for the fifth embodiment for the display device according to the present invention;
FIG. 16 is a schematic diagram illustrating the top view for the fifth embodiment for the display device according to the present invention;
FIG. 17 is a schematic diagram illustrating the side view for the sixth embodiment for the display device according to the present invention;
FIG. 18 is a schematic diagram illustrating the side view for the seventh embodiment for the display device according to the present invention;
FIG. 19 is a schematic diagram illustrating the side view for the eighth embodiment for the display device according to the present invention;
FIG. 20 is a schematic diagram illustrating the side view for the ninth embodiment for the display device according to the present invention;
FIGS. 21 and 22 are three-dimensional schematic diagrams illustrating the tenth embodiment for the display device according to the present invention;
FIG. 23 is a three-dimensional schematic diagram illustrating the eleventh embodiment for the display device according to the present invention; and
FIG. 24 is a three-dimensional schematic diagram illustrating the twelfth embodiment for the display device according to the present invention.

### DETAILED DESCRIPTION

The present disclosure will be described with respect to particular embodiments and with reference to certain drawings, but the disclosure is not limited thereto but is only limited by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice. It is clear that other embodiments can be configured according to the knowledge of persons skilled in the art without departing from the true technical teaching of the present disclosure, the claimed disclosure being limited only by the terms of the appended claims.

It is to be noticed that the term "including," used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device including means A and B" should not be limited to devices consisting only of components A and B.

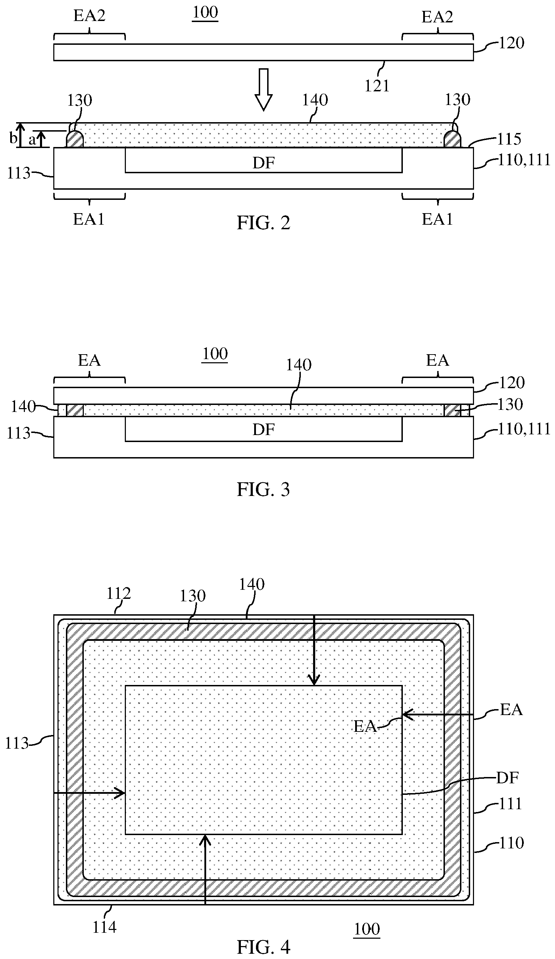

FIGS. 2 and 3 are schematic diagrams illustrating a side view for the first embodiment for the display device according to the present invention. FIG. 4 is schematic diagram illustrating a top view for the first embodiment for the display device according to the present invention. In this embodiment, the display device 100 comprises a display module 110 arranged below and an upper module 120 arranged above the display module 110. The display module 110 is preferably a plasma display panel (PDP), a liquid crystal display (LCD), a thin film transistor liquid crystal display (TFT-LCD), a light emitting diode display (LED), a micro light emitting diode display (micro-LED), an organic light emitting diode display (OLED), or an electronic ink thin film display, the upper module 120 is preferably a touch panel, a protective glass, or a protective layer, the upper module 120 is preferably The display module 110 and the upper module 120 are both planar structures.

The upper module 120 is assembled with the display module 110 by a lamination process, and the display module 110 has four sides, which are the first side 111, the second side 112, the third side 113, the fourth side 114, the first edge area EA1, the display surface DF, and a front surface 115 facing the upper module 120, and the upper module 120 has a lower surface 121 facing the display module 110 and the second edge area EA2. When the upper module 120 and the display module 110 are laminated to form the display device 100, the first edge area EA1 and the second edge area EA2 are combined to form the edge area EA.

For the display device 100, the display module 110 is the core module that provides the display of digital contents, and the upper module 120 can be regarded as an accessory or auxiliary module of the display module 110, such that the size of the entire display device 100 is determined by the size and dimensions of the display module 110. The size of the upper module 120 is preferable to passively follow and maintain the same size as the size of the display module 110, or slightly larger or smaller than the display module 110.

In this embodiment, it assumes that both the display module 110 and the upper module 120 approximately are the same size, the first edge area EA1, the second edge area EA2 and the edge area EA are defined by the area covered from the edge consisting of the display module 110, i.e., the first edge 111, the second edge 112, the third edge 113 and the fourth edge 114 extending inwardly to the edge of the display surface DF. The first edge area EA1, the second edge area EA2 and the edge area EA preferably do not cover the display surface DF and comprise all non-display areas other than the display surface DF, as shown in FIG. 4.

In this embodiment, the lamination process between the upper module 120 and the display module 110 comprises first applying a layer of edge adhesive layer 130 to the first edge area EA1 of the front surface 115 of the display module 110 to attach a layer of edge adhesive layer 130 to the first edge area EA1 of the display module 110.

After the edge adhesive layer 130 is applied, the edge adhesive layer 130 is further heated at a temperature between 20°C and 95°C for about 15 minutes to 45 minutes to cure the edge adhesive layer 130, or the edge adhesive layer 130 is cured by other means such as UV for equivalent curing.

Then, a conformal adhesive layer 140 is then applied to the front surface 115 of the display module 110, and the conformal adhesive layer 140 should preferably cover at least the entire display surface DF, and the height a of the edge adhesive layer 130 is preferably between about 1/3 to 3/4 of the thickness b of the conformal adhesive layer 140.

When the edge adhesive layer 130 and the conformal adhesive layer 140 are configured, the upper module 120 and the display module 110 are pressed together so that the upper module 120 and the display module 110 are laminated to each other through the edge adhesive layer 130 and the conformal adhesive layer 140 to form the display device 100.

The viscosity of the edge adhesive layer 130 before curing is approximately between 50,000cp and 200,000cp, and the cured Shore hardness is between 50 of Shore 00 and 60 of Shore A. The edge adhesive layer 130 is compressible, and comprises one of a AB glue, a hard silicone, a catalyst, a hardener, an acrylic based glue, a PU based glue, an Epoxy based glue, a resin based glue, an organosilicon polymer, a room temperature curing glue, a UV curing glue, a heat-curing glue, a composite glue and a combination thereof.

The conformal adhesive layer 140 comprises one of a silica gel, a vinyl group, an equivalent reactive functional group with excessive vinyl and a combination thereof, and is pre-cured before the display module 110 is laminated to the upper layer 120. The conformal adhesive layer 140 is cured with a Shore 00 hardness ranging from 0 to 80 and has a third compressibility and a light transmittance of more than 91%.

The conformal adhesive layer 140 is a kind of gel based optical adhesive, which is made by pre-curing, partially or fully pre-cured liquid optical adhesive before the lamination process begins, so that the liquid optical adhesive is transformed into a colloidal gel with physical properties between liquid and solid state. However, the conformal adhesive layer 140 can maintain its shape without external disturbance without deformation without external disturbance, and the pre-cured conformal adhesive layer 140 has a colorless and transparent appearance that looks like jelly, but has high plasticity and elasticity, and is neither in the solid state nor in the liquid state.

The conformal adhesive layer 140 also has proper flowability, which does not increase the difficulty and complexity of the lamination process due to the lack of legal shape of the traditional liquid state optical adhesive, nor does it become difficult to flow and fill the seam like the traditional solid state optical adhesive, which leaves more air bubbles and voids after lamination and causes bright spots or light spots on the product. The flowability of the conformal adhesive layer 140 is adjusted to penetrate into the assembly seam and various gaps and holes of the display module 110 and the upper module 120 and automatically fill the seam, which can improve the adhesion between the display module 110 and the upper module 120, and the display device 100 does not necessarily need to perform debubbling when using the conformal adhesive layer 140 for the lamination process.

The conformal adhesive layer 140 also has the following physical properties, a bulk resistance of at least 8×10¹⁵ (Ω · cm), a surface resistivity of at least 3×10¹⁵ (Ω · cm), a dielectric constant in a range between 2.79 and 2.81, and an adhesive strength between 3.0N and 10N (Newton/20mm).

In this embodiment, the Shore hardness of the conformal adhesive layer 140 is adjusted to be less than the Shore hardness of the edge adhesive layer 130, and the third compressibility of the conformal adhesive layer 140 is adjusted to be greater than the compressibility of the edge adhesive layer 130, so that the harder edge adhesive layer 130 can appropriately squeeze the conformal adhesive layer 140 to fill the seam during the lamination process, and the softer conformal adhesive layer 140 can generate lower internal stress for the display module 110 and the upper module 120. The fully cured edge adhesive layer 130 can help the conformal adhesive layer 140, which is located near the edge adhesive layer 130, to further cure to effectively prevent external vapor infiltration.

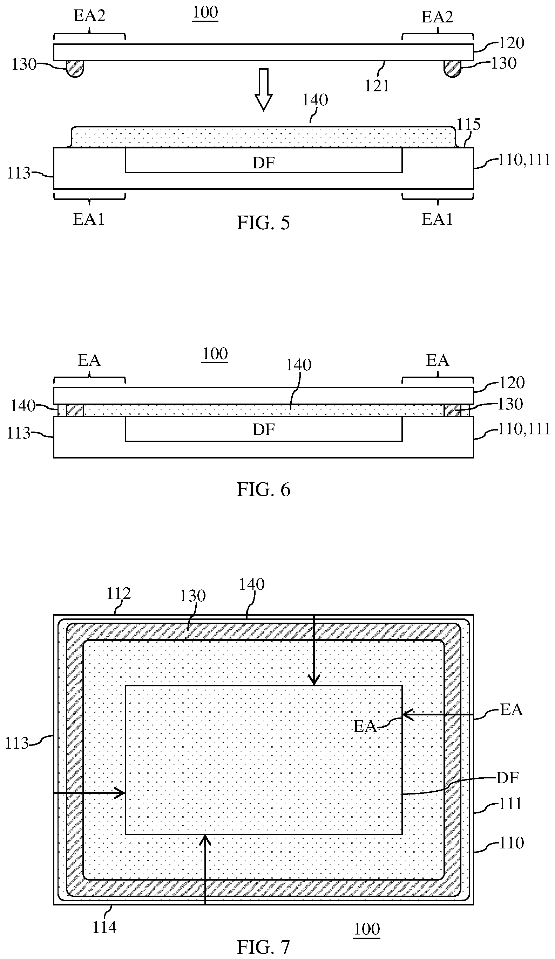

FIGS. 5 and 6 are schematic diagrams illustrating the side view for the second embodiment for the display device according to the present invention. FIG. 7 is a schematic diagram illustrating the top view for the second embodiment for the display device according to the present invention. The second embodiment is based on the first embodiment and comprises all of the technical features in the first embodiment. In this embodiment, the lamination between the upper module 120 and the display module 110 is performed by first applying a layer of edge adhesive layer 130 to the second edge area EA2 of the lower surface 121 of the upper module 120 to attach a layer of edge adhesive layer 130 to the second edge area EA2 of the upper module 120.

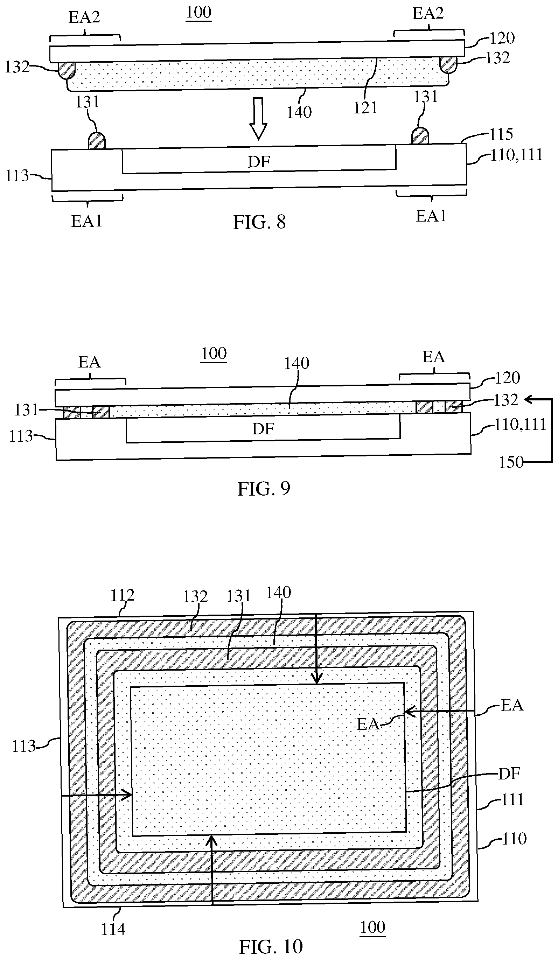

FIGS. 8 and 9 are schematic diagrams illustrating the side view for the third embodiment for the display device according to the present invention. FIG. 10 is a schematic diagram illustrating the top view for the third embodiment for the display device according to the present invention. The third embodiment is based on the first embodiment and the second embodiment and comprises all of the technical features in the first embodiment and the second embodiment. In this embodiment, the edge area EA of the display device 100 comprises two loops of edge adhesive layers, namely the first edge adhesive layer 131 and the second edge adhesive layer 132.

In this embodiment, the second edge adhesive layer 132 is attached to the second edge area EA2 of the lower surface 121 of the upper module 120, the conformal adhesive layer 140 is attached to the lower surface 121 of the upper module 120, the first edge adhesive layer 131 is attached to the first edge area EA1 of the front surface 115 of the display module 110, and the area of the first edge adhesive layer 131 is preferably slightly smaller than the area of the second edge adhesive layer 132. The first edge adhesive layer 131 and the second edge adhesive layer 132 are preferably separated from each other by 1 mm to 10 mm.

Since the first edge adhesive layer 131 and the second edge adhesive layer 132 maintain a larger gap therebetween, the first edge adhesive layer 131 and the second edge adhesive layer 132 can be kept non-overlapping with each other, and the gap between the first edge adhesive layer 131 and the second edge adhesive layer 132 is filled with the conformal adhesive layer 140 after the lamination process.

In this embodiment, the first edge adhesive layer 131 has a first Shore hardness and a first compressibility, the second edge adhesive layer 132 has a second Shore hardness and a second compressibility, the Shore hardness of the conformal adhesive layer 140 is adjusted to be less than the first Shore hardness and the second Shore hardness, and the third compressibility of the conformal adhesive layer 140 is adjusted to be greater than the first compressibility and the second compressibility.

In this embodiment, the first edge adhesive layer 131, the second edge adhesive layer 132, and the conformal adhesive layer 140 jointly form a composite optical adhesive layer 150 between the display module 110 and the upper module 120.

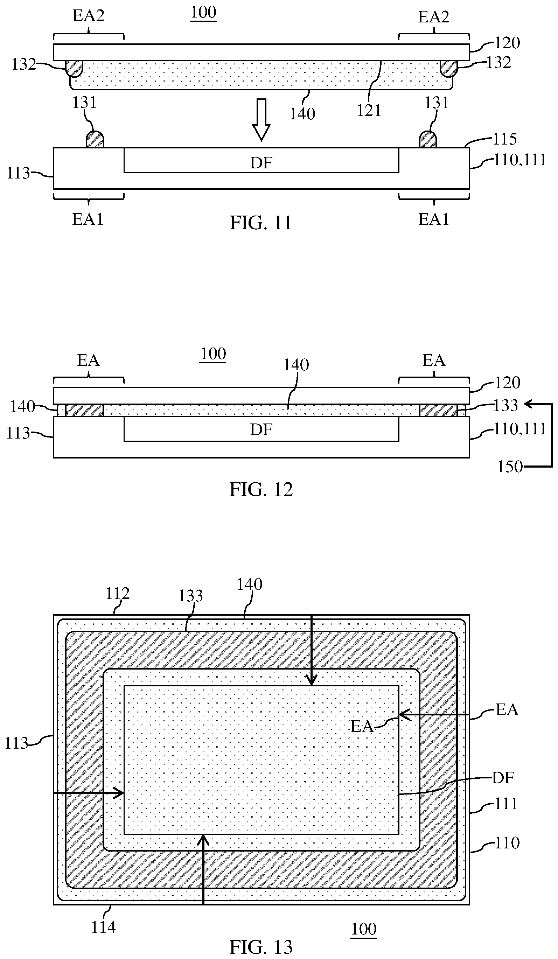

FIGS. 11 and 12 are schematic diagrams illustrating the side view for the fourth embodiment for the display device according to the present invention. FIG. 13 is a schematic diagram illustrating the top view for the fourth embodiment for the display device according to the present invention. The fourth embodiment is based on the first embodiment to the third embodiment and comprises all of the technical features in the first embodiment to the third embodiment. In this embodiment, the first edge adhesive layer 131 and the second edge adhesive layer 132 have a small gap therebetween, so that after the lamination process, the first edge adhesive layer 131 and the second edge adhesive layer 132 are merged into a single loop edge adhesive layer 133.

In this embodiment, the single loop edge adhesive layer 133 and the conformal adhesive layer 140 jointly form a composite optical adhesive layer 150 between the display module 110 and the upper module 120.

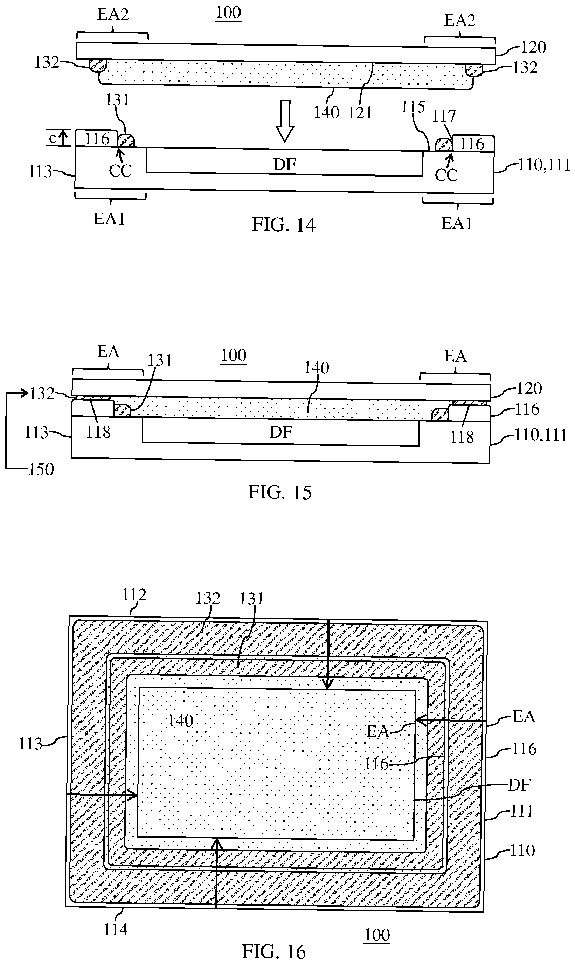

FIGS. 14 and 15 are schematic diagrams illustrating the side view for the fifth embodiment for the display device according to the present invention. FIG. 16 is a schematic diagram illustrating the top view for the fifth embodiment for the display device according to the present invention. The fifth embodiment is based on the first embodiment to the fourth embodiment and comprises all of the technical features in the first embodiment to the fourth embodiment. In this embodiment, the display module 110 also comprises a loop of frame 116, which protrudes from the front surface 115 and has an perpendicular surface 117 and a bezel height c. Therefore, there is a certain segment or height difference between the frame 116 and the front surface 115, and the frame 116 is located in the non-display area but in the first edge area EA1, and the intersection of the perpendicular surface 117 and the front surface 115 jointly form the corner CC.

In this embodiment, the first edge adhesive layer 131 is attached to and covers the corner CC, and the second edge adhesive layer 132 is attached to the second edge area EA2 of the lower surface 121 of the upper module 120, and when the lamination process is completed, there is no overlap between the first edge adhesive layer 131 and the second edge adhesive layer 132, and the first edge adhesive layer 131 mainly covers the corner CC, and the second edge adhesive layer 132 covers the upper surface 118 of the frame 116.

In this embodiment, the first edge adhesive layer 131, the second edge adhesive layer 132 and the conformal adhesive layer 140 jointly form a composite optical adhesive layer 150 between the display module 110 and the upper module 120.

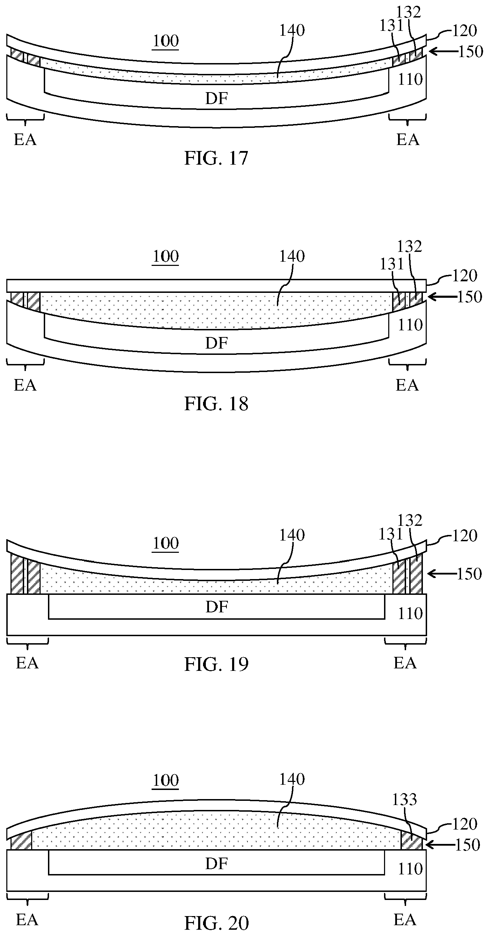

FIG. 17 is a schematic diagram illustrating the side view for the sixth embodiment for the display device according to the present invention. The sixth embodiment is based on the first embodiment to the fifth embodiment and comprises all of the technical features in the first embodiment to the fifth embodiment. In this embodiment, the display module 110 and the upper module 120 both comprise a curved structure, and the display module 110 is preferably a curved screen, such as, but not limited to, a curved screen having a curvature of 500R, 1000R, 1800R, 2300R, 3000R, or 4000R. After the display module 110 and the upper module 120 are laminated, the edge area EA of the display device 100 comprises two loops of the adhesive layer, which are the first edge adhesive layer 131 and the second edge adhesive layer 132, and the remaining area comprises the conformal adhesive layer 140. In some embodiments, the first edge adhesive layer 131 and the second edge adhesive layer 132 are combined into the single loop edge adhesive layer 133.

FIG. 18 is a schematic diagram illustrating the side view for the seventh embodiment for the display device according to the present invention. The seventh embodiment is based on the first embodiment to the sixth embodiment and comprises all of the technical features in the first embodiment to the sixth embodiment. As mentioned above, the conformal adhesive layer 140 is suitable for use in the lamination process for curved structures because the conformal adhesive layer 140 applies less internal stress to the display module 110 and the upper layer 120 during the lamination process.

In this embodiment, the display module 110 comprises a curved structure and the upper module 120 comprises a flat structure, and the display module 110 is preferably a curved screen. After the display module 110 and the upper module 120 are laminated, the edge area EA of the display device 100 comprises two loops of the first edge adhesive layer 131 and the second edge adhesive layer 132, and the remaining area is filled with the conformal adhesive layer 140. In some embodiments, the first edge adhesive layer 131 and the second edge adhesive layer 132 are combined into the single loop edge adhesive layer 133.

FIG. 19 is a schematic diagram illustrating the side view for the eighth embodiment for the display device according to the present invention. The eighth embodiment is based on the first embodiment to the seventh embodiment and comprises all of the technical features in the first embodiment to the seventh embodiment. In this embodiment, the display module 110 comprises a flat structure and the upper module 120 comprises a curved structure that is curved in a direction opposite to the display module 110.

FIG. 20 is a schematic diagram illustrating the side view for the ninth embodiment for the display device according to the present invention. The ninth embodiment is based on the first embodiment to the eighth embodiment and comprises all of the technical features in the first embodiment to the eighth embodiment. In this embodiment, the display module 110 comprises a flat structure and the upper module 120 comprises a curved structure that is curved in a direction opposite to the display module 110 and is configured with the single loop edge adhesive layer 133.

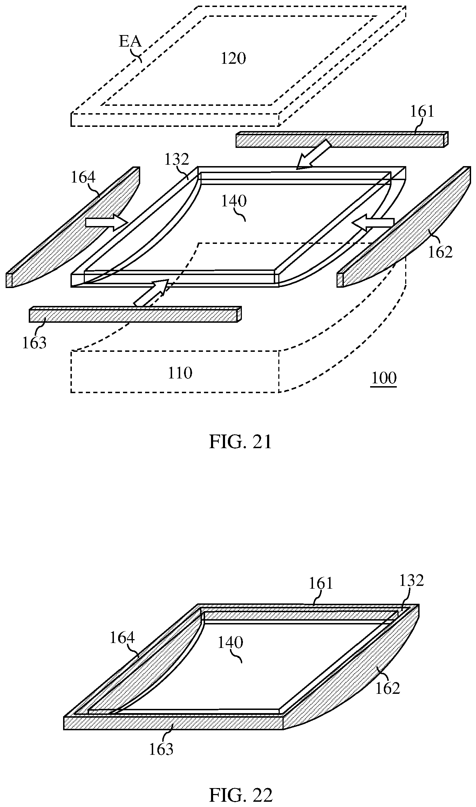

FIGS. 21 and 22 are three-dimensional schematic diagrams illustrating the tenth embodiment for the display device according to the present invention. The tenth embodiment is a variation of the seventh embodiment, based on the first embodiment to the ninth embodiment and comprises all of the technical features in the first embodiment to the ninth embodiment. In this embodiment, the display module 110 comprised in the display device 100 is preferably a curved display, and the upper module 120 is preferably a touch panel. The edge area EA comprises a single loop of the second edge adhesive layer 132 and the remaining area is filled with the conformal adhesive layer 140.

In this embodiment, a plurality of light shielding layers 161-164 are attached to the four outer sides surrounding the edge adhesive layer. The light shielding layers 161-164 preferably comprises a material selected from one of a black colloidal gel, an opaque resin, an opaque acrylic, an opaque plastic sheet, and an opaque metal sheet. The light shielding layers 161-164 is attached to the four outer sides surrounding the edge adhesive layer preferably by adhering for example, as shown in FIG. 21. After the display module 110 and the upper module is successfully adhered together, the finished structure formed by the conformal adhesive layer 140, the second edge adhesive layer 132, and the light shielding layers 161-164 is shown in FIG. 22.

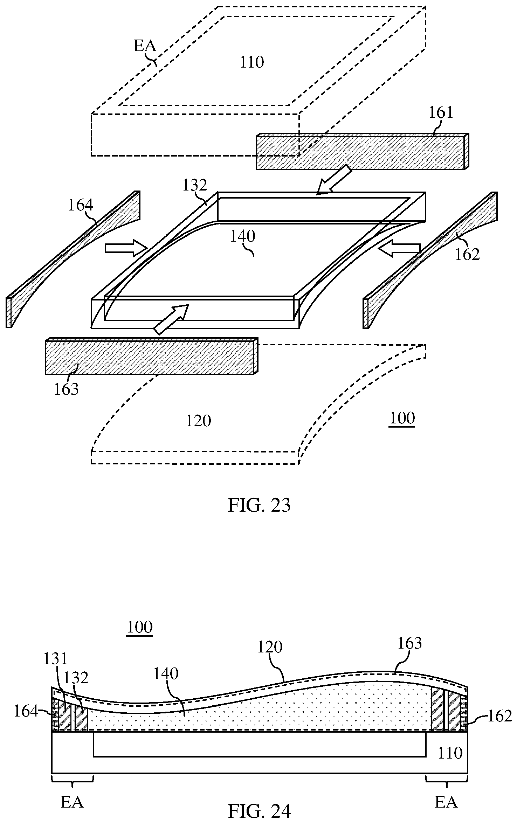

FIG. 23 is a three-dimensional schematic diagram illustrating the eleventh embodiment for the display device according to the present invention. The eleventh embodiment is a variation of the eighth embodiment, based on the first embodiment to the tenth embodiment and comprises all of the technical features in the first embodiment to the tenth embodiment. In this embodiment, the display module 110 comprised in the display device 100 is preferably a flat display, and the upper module 120 is preferably a curved touch panel. The edge area EA comprises a single loop of the second edge adhesive layer 132 and the remaining area is filled with the conformal adhesive layer 140. There are multiple light shielding layers 161-164 attached to the four outer sides surrounding the second edge adhesive layer 132.

FIG. 24 is a three-dimensional schematic diagram illustrating the twelfth embodiment for the display device according to the present invention. The twelfth embodiment is based on the first embodiment to the eleventh embodiment and comprises all of the technical features in the first embodiment to the eleventh embodiment. In this embodiment, the display module 110 comprised in the display device 100 is preferably a flat display, and the upper module 120 is preferably a wave shape touch panel or a curved touch panel with irregular shape. The edge area EA comprises two loops of the first edge adhesive layer 131 and the second edge adhesive layer 132 and the remaining area is filled with the conformal adhesive layer 140. There are multiple light shielding layers 161-164 attached to the four outer sides surrounding the second edge adhesive layer 132.

When the material of the light shielding layers 161-164 is an opaque colloidal gel, the amount of external incident light can be controlled by adjusting the color depth of the opaque colloidal gel, in order to adjust the overall display brightness of the display device 100. Additional substances such as but not limited to conductive particles, conductive polymers, or graphene materials can be further added, mixed, or doped into the opaque colloidal gel to allow the light shielding layers 161-164 to have different degrees of conductivity. This allows the light shielding layers 161-164 to have the functions of electromagnetic interference (EMI) resistance and grounding.

By adjusting the hardness and material of the light shielding layers 161-164, different degrees of supporting effect can be achieved. For example, when the material of the light shielding layers 161-164 is an opaque colloidal gel, a high-hardness hardening agent can be further doped into the opaque colloidal gel, or the light-blocking layers 161-164 can be made of metal material. This will result in excellent support effect for the light shielding layers 161-164.

There are further embodiments provided as follows.

Embodiment 1: A display device, which is assembled by an adhesive bonding process, comprising: a display module comprising an edge area, a front surface facing toward an upper module, a display surface incorporated into the front surface and displaying a digital content; the upper module comprising the edge area and configured above the display module; an edge adhesive layer having a Shore hardness and configured in a part of the edge area and between the display module and the upper module; and a conformal adhesive layer configured between the display module and the upper module, having a third Shore hardness less than the Shore hardness and covering a part of the display surface.

Embodiment 2: The display device as described in Embodiment 1, further comprising one of: a frame configured in the edge area, protruded from the front surface and having a perpendicular surface and a frame height, and having a step raised from the front surface; a corner formed by the perpendicular surface and the front surface and situated at where the perpendicular surface and the front surface meet with each other, wherein the perpendicular surface and the front surface share with a common edge; and a light shielding layer attached to a side of the edge adhesive layer, wherein the edge area comprises the frame and the corner.

Embodiment 3: The display device as described in Embodiment 2, wherein the edge area covers a scope extended from a most outer edge of the display module toward a center to a display edge of the display area, and the edge area covers a part of a non-display area outside the display area.

Embodiment 4: The display device as described in Embodiment 2, wherein the light shielding layer comprises a material selected from one of a black gel, an opaque resin, an opaque acrylic, an opaque plastic sheet, and an opaque metal sheet.

Embodiment 5: The display device as described in Embodiment 1, wherein the edge adhesive layer further comprises one of: a first edge adhesive layer having a first Shore hardness and configured in a part of the edge area and between the display module and the upper module; a second edge adhesive layer having a second Shore hardness and configured in a part of the edge area, between the display module and the upper module and in close proximity to the first edge adhesive layer; and a light shielding layer attached to a side of the second edge adhesive layer, wherein the first Shore hardness and the second Shore hardness are greater than the Shore hardness.

Embodiment 6: The display device as described in Embodiment 5, further comprising one of: the edge adhesive layer being compressible and having a compressibility; the first edge adhesive layer being compressible and having a first compressibility; the second edge adhesive layer being compressible and having a second compressibility; the conformal adhesive layer being compressible and having a third compressibility; and the third compressibility is greater than the compressibility, the first compressibility and the second compressibility.

Embodiment 7: The display device as described in Embodiment 5, wherein the edge adhesive layer, the first edge adhesive layer and the second edge adhesive layer comprise one of a AB glue, a hard silicone, a catalyst, a hardener, an acrylic based glue, a PU based glue, an Epoxy based glue, a resin based glue, an organosilicon polymer, a room temperature curing glue, a UV curing glue, a heat-curing glue, a composite glue and a combination thereof.

Embodiment 8: The display device as described in Embodiment 5, wherein the edge adhesive layer, the first edge adhesive layer and the second edge adhesive layer has a viscosity in a range between 50,000cp and 200,000cp before curing and a hardness in range between Shore 00 50 and Shore A 60.

Embodiment 9: The display device as described in Embodiment 1, wherein the conformal adhesive layer further comprises one of a silica gel, a vinyl group, an equivalent reactive functional group with excessive vinyl and a combination thereof.

Embodiment 10: The display device as described in Embodiment 1, wherein the conformal adhesive layer is pre-cured before the implementation of adhesive bonding process and has a hardness in a range between Shore 00 0 and Shore 00 80 after pre-cured and a light permeability greater than 91%.

Embodiment 11: The display device as described in Embodiment 1, wherein the conformal adhesive layer has a bulk resistance of at least 8×10¹⁵(Ω · cm), a surface resistivity of at least 3×10¹⁵(Ω·cm), a dielectric constant in a range between 2.79-2.81 and an adhesive strength in a range between 3.0N and 10N (N/20mm).

Embodiment 12: The display device as described in Embodiment 1, wherein the upper module is a touch panel, a protective glass or a protective layer, the display module is a plasma display panel, a liquid crystal display, a TFT liquid crystal display, a LED display, a micro LED display, an OLED display or an electronic ink thin film display.

Embodiment 13: The display device as described in Embodiment 1, wherein the display module comprises a flatten structure and a curved structure.

Embodiment 14: The display device as described in Embodiment 1, wherein the upper module comprises a flatten structure and a curved structure.

Embodiment 15: A display device, which is assembled by an adhesive bonding process, comprising: a display module comprising a first edge area; an upper module comprising a second edge area and configured above the display module; an edge adhesive layer having a compressibility and configured in a part of the first edge area and a part of the second edge area and between the display module and the upper module; and a conformal adhesive layer configured between the display module and the upper module and having a third compressibility great than the compressibility.

While the disclosure has been described in terms of what are presently considered to be the most practical and preferred embodiments, it is to be understood that the disclosure need not be limited to the disclosed embodiments. On the contrary, it is intended to cover various modifications and similar arrangements included within the scope of the appended claims, which are to be accorded with the broadest interpretation so as to encompass all such modifications and similar structures. Therefore, the above description and illustration should not be taken as limiting the scope of the present disclosure which is defined by the appended claims.

## Claims

1. A display device (100), which is assembled by an adhesive bonding process, comprising:
a display module (110) comprising an edge area, a front surface (115) facing toward an upper module (120), a display surface incorporated into the front surface (115) and displaying a digital content;
the upper module (100) comprising the edge area and configured above the display module (110);
an edge adhesive layer (130) having a Shore hardness and configured in a part of the edge area and between the display module (110) and the upper module (120); and
a conformal adhesive layer (140) configured between the display module (110) and the upper module (120), having a third Shore hardness less than the Shore hardness and covering a part of the display surface.

2. The display device (100) as claimed in Claim 1, further comprising one of:
a frame (116) configured in the edge area, protruded from the front surface (115) and having a perpendicular surface (117) and a frame height, and having a step raised from the front surface (115);
a corner formed by the perpendicular surface (117) and the front surface (115) and situated at where the perpendicular surface (117) and the front surface (115) meet with each other, wherein the perpendicular surface (117) and the front surface (115) share with a common edge; and
a light shielding layer (161-164) attached to a side of the edge adhesive layer (130),
wherein the edge area comprises the frame (116) and the corner.

3. The display device (100) as claimed in Claim 2, wherein the edge area covers a scope extended from a most outer edge of the display module (110) toward a center to a display edge of the display area, and the edge area covers a part of a non-display area outside the display area.

4. The display device (100) as claimed in Claim 2, wherein the light shielding layer (161-164) comprises a material selected from one of a black gel, an opaque resin, an opaque acrylic, an opaque plastic sheet, and an opaque metal sheet.

5. The display device (100) as claimed in Claim 1, wherein the edge adhesive layer (130) further comprises one of:
a first edge adhesive layer (131) having a first Shore hardness and configured in a part of the edge area and between the display module (110) and the upper module (120);
a second edge adhesive layer (132) having a second Shore hardness and configured in a part of the edge area, between the display module (110) and the upper module (120) and in close proximity to the first edge adhesive layer (131); and
a light shielding layer (161-164) attached to a side of the second edge adhesive layer (132),
wherein the first Shore hardness and the second Shore hardness are greater than the Shore hardness.

6. The display device (100) as claimed in Claim 5, further comprising one of:
the edge adhesive layer (130) being compressible and having a compressibility;
the first edge adhesive layer (131) being compressible and having a first compressibility;
the second edge adhesive layer (132) being compressible and having a second compressibility;
the conformal adhesive layer (140) being compressible and having a third compressibility; and
the third compressibility is greater than the compressibility, the first compressibility and the second compressibility.

7. The display device (100) as claimed in Claim 5, wherein the edge adhesive layer (130), the first edge adhesive layer (131) and the second edge adhesive layer (132) comprise one of a AB glue, a hard silicone, a catalyst, a hardener, an acrylic based glue, a PU based glue, an Epoxy based glue, a resin based glue, an organosilicon polymer, a room temperature curing glue, a UV curing glue, a heat-curing glue, a composite glue and a combination thereof.

8. The display device (100) as claimed in Claim 5, wherein the edge adhesive layer (130), the first edge adhesive layer (131) and the second edge adhesive layer (132) has a viscosity in a range between 50,000cp and 200,000cp before curing and a hardness in range between Shore 00 50 and Shore A 60.

9. The display device (100) as claimed in Claim 1, wherein the conformal adhesive layer (140) further comprises one of a silica gel, a vinyl group, an equivalent reactive functional group with excessive vinyl and a combination thereof.

10. The display device (100) as claimed in Claim 1, wherein the conformal adhesive layer (140) is pre-cured before the implementation of adhesive bonding process and has a hardness in a range between Shore 00 0 and Shore 00 80 after pre-cured and a light permeability greater than 91%.

11. The display device (100) as claimed in Claim 1, wherein the conformal adhesive layer (140) has a bulk resistance of at least 8×10¹⁵(Ω·cm), a surface resistivity of at least 3×10¹⁵(Ω·cm), a dielectric constant in a range between 2.79-2.81 and an adhesive strength in a range between 3.0N and 10N (N/20mm).

12. The display device (100) as claimed in Claim 1, wherein the upper module (120) is a touch panel, a protective glass or a protective layer, the display module (110) is a plasma display panel, a liquid crystal display, a TFT liquid crystal display, a LED display, a micro LED display, an OLED display or an electronic ink thin film display.

13. The display device (100) as claimed in Claim 1, wherein the display module (110) comprises a flatten structure and a curved structure.

14. The display device (100) as claimed in Claim 1, wherein the upper module (120) comprises a flatten structure and a curved structure.

15. A display device (100), which is assembled by an adhesive bonding process, comprising:
a display module (110) comprising a first edge area;
an upper module (120) comprising a second edge area and configured above the display module (110);
an edge adhesive layer (130) having a compressibility and configured in a part of the first edge area and a part of the second edge area and between the display module (110) and the upper module (120); and
a conformal adhesive layer (140) configured between the display module (110) and the upper module (120) and having a third compressibility great than the compressibility.
